# EUROPÄISCHE PATENTSCHRIFT

(11) **EP 3 408 164 B1**
(45) Veröffentlichungstag und Bekanntmachung des Hinweises auf die Patenterteilung: **16.09.2020**
(21) Anmeldenummer: 17702519.4
(22) Anmeldetag: 24.01.2017
(51) Int. Cl.: B62D 35/00

(54) **LUFTLEITEINRICHTUNG FÜR EINEN FAHRZEUGBUG**
AIR-GUIDING DEVICE FOR A VEHICLE FRONT
DISPOSITIF DE GUIDAGE D'AIR POUR AVANT DE VÉHICULE

(30) Priorität: 28.01.2016 DE 102016000953
(43) Veröffentlichungstag der Anmeldung: 05.12.2018
(73) Patentinhaber: Daimler AG, 70372 Stuttgart (DE)
(72) Erfinder: JEHLE-GRAF, Erich, 76228 Karlsruhe (DE); KONERMANN, Martin, 70619 Stuttgart (DE)
(74) Vertreter: JENSEN & SON
(86) Internationale Anmeldenummer: PCT/EP2017/000081
(87) Internationale Veröffentlichungsnummer: WO 2017/129358

(56) Entgegenhaltungen:
- DE-A1-102009 034 518
- DE-A1-102010 050 988
- FR-A1- 2 858 796
- US-A1- 2015 345 578

## Beschreibung

Die Erfindung betrifft eine Luftleiteinrichtung für einen Fahrzeugbug gemäß Oberbegriff des Anspruchs 1.

Aus der DE 10 2011 012 119 A1 geht eine Luftleiteinrichtung hervor, die ein jeweiliges Luftleitelement pro Fahrzeugseite umfasst, welches in einem Übergangsbereich zwischen einem Frontbereich und einem Seitenbereich des Fahrzeugbugs angeordnet und aus einer eingefahrenen in eine ausgefahrene Stellung verlagerbar ist. Durch die Bewegbarkeit des Luftleitelements kann dabei dessen Winkel so eingestellt werden, dass sich eine veränderte Anströmung des Luftleitelements ergibt, wodurch sich wiederum die Umströmung eines in Fahrzeuglängsrichtung hinter dem Luftleitelement angeordneten Rades verändern beziehungsweise verbessern lässt.

Generell ist es bei Fahrzeugen mit kurzem vorderen Überhang und/oder einer starken Pfeilung problematisch, dass im Übergangsbereich zwischen dem Frontbereich und dem Seitenbereich des Fahrzeugbugs die Luftströmung nicht genügend umgelenkt wird und es dadurch zu ungünstigen Druckverhältnissen insbesondere im Bereich der vorderen Fahrzeugräder kommen kann. Dies hat im Ergebnis eine höhere Anströmung der Radhäuser beziehungsweise eine erhöhte Ausströmung aus den Radhäusern zur Folge, was mit einer Erhöhung des Luftwiderstands des Gesamtfahrzeugs einhergeht.

Eine gattungsgemäße Luftleiteinrichtung geht aus der DE 10 2009 034 518 A1 hervor.

Aufgabe der vorliegenden Erfindung ist es daher, eine Luftleiteinrichtung der eingangs genannten Art zu schaffen, mittels welcher sich die Aerodynamik des Kraftwagens im Bereich des Fahrzeugbugs deutlich verbessern lässt, und zwar insbesondere bei Fahrzeugen mit kurzen vorderen Überhängen und/oder einer starken Pfeilung.

Diese Aufgabe wird erfindungsgemäß durch eine Luftleiteinrichtung mit den Merkmalen des Anspruchs 1 gelöst. Vorteilhafte Ausgestaltungen mit zweckmäßigen Weiterbildungen der Erfindung sind Gegenstand der abhängigen Patentansprüche.

Um eine verbesserte Aerodynamik des Kraftwagens im Bereich des Fahrzeugbugs zu erreichen, weist die erfindungsgemäße Luftleiteinrichtung ein Luftleitelement auf, welches in der ausgefahrenen Stellung mit einem dahinter liegenden Verkleidungselements des Fahrzeugbugs einen Strömungskanal ausbildet, mittels welchem eine den Übergangsbereich zwischen dem Frontbereich und dem Seitenbereich des Fahrzeugbugs überströmende Luftströmung umlenkbar ist. Mit anderen Worten wird nach dem Ausfahren des Luftleitelements zwischen dessen Innenseite und einer Außenseite eines - in eingefahrener Stellung des Luftleitelements von diesem überdeckten - dahinterliegenden Verkleidungselements ein im Querschnitt beispielsweise schlitzartiger Strömungskanal ausgebildet oder aber zur Luftdurchströmung geöffnet/freigegeben, welcher entsprechend der Gestaltung der Innenseite des Luftleitelements beziehungsweise der Außenseite des dahinterliegenden Verkleidungselements eine Umlenkung beziehungsweise Vergleichmäßigung der Luftströmung bewirkt, welche den Übergangsbereich zwischen dem Frontbereich und dem Seitenbereich des Fahrzeugbugs überströmt. Um dabei eine besonders günstige Umlenkung zu erreichen, ist es natürlich erforderlich, dass das hinter dem Luftleitelement liegende Verkleidungselement zumindest im Wesentlichen flächig in den Kraftwagenbug integriert ist beziehungsweise eine zumindest im Wesentlichen strömungsgünstige Außenhautpartie im Bereich hinter dem ausgefahrenen Luftleitelement bildet. Somit kann die zwischen dem ausgefahrenen Luftleitelement und dem dahinter liegenden Verkleidungselement durchströmende Luftströmung besonders günstig und möglichst turbulenzfrei um beziehungsweise in das dahinterliegende Radhaus des Kraftwagens umgelenkt beziehungsweise eingeleitet werden. Es ist besonders wünschenswert, dass möglichst annährend radflankenparallele Stromlinien bei ausgefahrenem Luftleitelement erzeugt werden.

Des Weiteren ist vorgesehen, dass der Strömungskanal in der eingefahrenen Stellung des Luftleitelements zumindest im Wesentlichen verschlossen ist. Dies bedeutet im Umkehrschluss, dass das Luftleitelement in der eingefahrenen Stellung möglichst weitgehend flächenbündig an dem dahinterliegenden Verkleidungselement anliegt beziehungsweise so anliegt, dass das Luftleitelement in die Karosserieaußenhaut zumindest überwiegend stufenlos einfügt. Hierdurch kann bei in eingefahrener Position angeordnetem Luftleitelement der Strömungswiderstand des Kraftwagens optimiert werden.

Weiterhin ist vorgesehen, dass das Luftleitelement mit einer hinteren Endkante an ein Radhaus eines zugehörigen Vorderrades angrenzt. Hierdurch wird im Bereich des Radhauses eine besonders günstige Überströmung erzielt. Durch das Verlagern des Luftleitelements in die ausgefahrene Stellung ist eine Öffnung im Bereich einer vorderen Außenkante des Radhauses öffenbar, durch welche eine Luftströmung leitbar ist. Durch Freigeben dieser Öffnung, welche beispielsweise als Luftspalt ausgebildet sein kann, kann ein Teil der mittels des Luftleitelements geleiteten Luft auf eine Reifenflanke des Vorderades gelangen. Durch die so zu erzeugenden beiden Teilluftströme wird eine optimale Überströmung der jeweils dahinter liegenden Radhäuser erzielt. Je nach Abstand der Öffnung vom Radhaus kann sich an die Öffnung ein quasi kanalartiger Durchgang anschließen, welcher in das Radhaus mündet. Des Weiteren ist vorgesehen, dass durch das Verlagern des Luftleitelements in die ausgefahrene Stellung die Öffnung in einer Radhausverkleidung an deren Außenkante öffenbar ist, durch welche eine Luftströmung leitbar ist. Mit anderen Worten ist die zuvor beschriebene Öffnung vorzugsweise in der Radhausverkleidung vorgesehen, um somit jeweilige Teilluftströme zu erzielen, die eine optimale Überströmung der vorderen Radhäuser ermöglichen.

Eine vorteilhafte Ausführungsform der Erfindung sieht vor, dass sich das Luftleitelement zumindest im Wesentlichen über die gesamte Höhe des Kraftwagenbugs erstreckt. Hierdurch wird ebenso über die zumindest im Wesentlichen gesamte Höhe des dahinter liegenden Radhauses eine entsprechende Umlenkung und bessere Überströmung der Radhäuser erzielt.

Eine weitere vorteilhafte Ausführungsform sieht vor, dass die Öffnung als Schlitz oder dergleichen ausgebildet ist, welcher sich über in etwa über halbe Höhe des zugehörigen Vorderrades erstreckt und so angeordnet ist, dass er in etwa auf Höhe der obere Radhälfte angeordnet ist. Somit werden auch entsprechende Teilluftströme erzielt, welche sich über zumindest den oberhalb der Radachse befindlichen Teil erstrecken beziehungsweise diese Bereich abdecken, um so insgesamt eine besonders günstige Überströmung zu erzielen. Damit wird auch sichergestellt, dass mittels dieser über die Öffnung in das Radhaus beziehungsweise in einen an das Radhaus seitlich angrenzenden, Vorderrad nahen Bereich gerichtete Luftströmung nicht die am Unterboden des Kraftwagens wirkende Luftströmung negativ beeinflusst, in dieser beispielsweise Turbulenzen erzeugt werden.

Schließlich hat es sich als vorteilhaft gezeigt, wenn das Luftleitelement in Abhängigkeit einer Fahrgeschwindigkeit des Kraftwagens verlagerbar ist. Somit kann auf einfache Weise eine ideale Einstellung der Überströmung der jeweiligen Vorderräder beziehungsweise Radhäuser in Abhängigkeit der aktuellen Fahrgeschwindigkeit erfolgen.

Weitere Vorteile, Merkmale und Einzelheiten der Erfindung ergeben sich aus der nachfolgenden Beschreibung von zwei bevorzugten Ausführungsbeispielen sowie anhand der Zeichnung. Dabei zeigen:

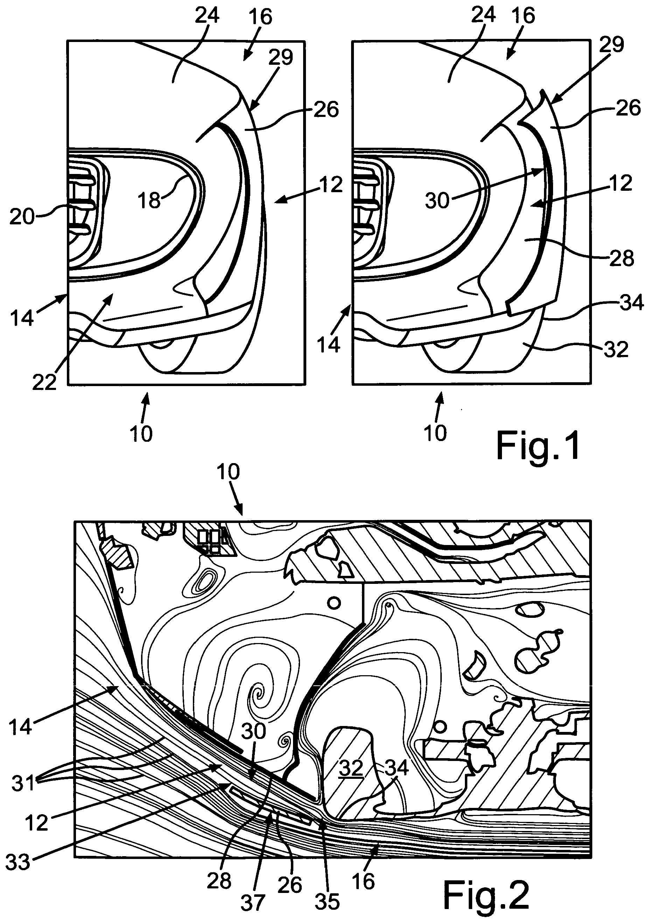

- Fig. 1: jeweilige ausschnittsweise und leicht perspektivische Vorderansichten auf eine Luftleiteinrichtung für einen Fahrzeugbug eines Personenkraftwagens gemäß einer ersten Ausführungsform mit einem jeweiligen Luftleitelement pro Fahrzeugseite, welches in einem Übergangsbereich zwischen einem Frontbereich und einem Seitenbereich des Fahrzeugs angeordnet und aus einer links erkennbaren eingefahrenen Stellung in eine rechts dargestellte ausgefahrene Stellung verlagerbar ist, in welcher das Luftleitelement mit einem dahinter liegenden Verkleidungselement des Fahrzeugbugs einen Strömungskanal bildet, in welchem ein dem Übergangsbereich zwischen dem Frontbereich und dem Seitenbereich des Fahrzeugbugs überströmende Luftströmung umlenkbar ist;
- Fig. 2: eine ausschnittsweise und schematische Schnittansicht entlang einer horizontal in Fahrzeuglängsrichtung und in Fahrzeugquerrichtung verlaufenden Schnittebene, wobei das Luftleitelement in ausgefahrener Stellung gezeigt ist und jeweilige Strömungslinien eine Luftströmung andeuten, welche zwischen dem entsprechenden Verkleidungselement des Fahrzeugbugs und dem Luftleitelement sowie außenseitig von diesem strömt;

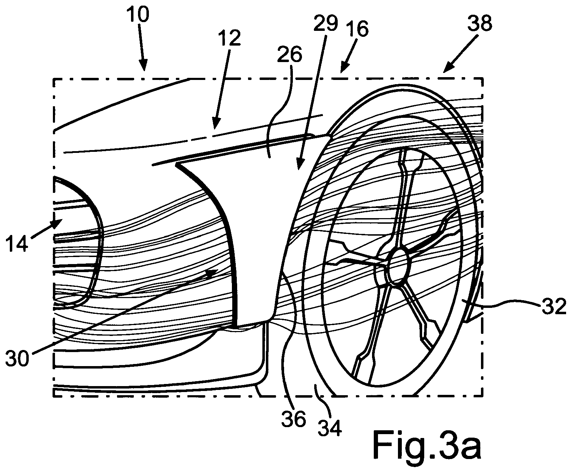

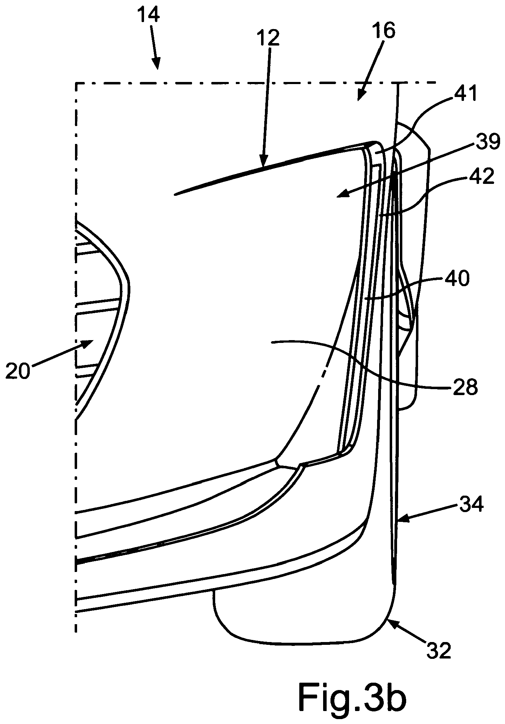

- Fig. 3a, 3b: jeweilige Perspektivansichten einer Luftleiteinrichtung für ein Fahrzeugbug gemäß einer weiteren Ausführungsform, bei welcher durch das Luftleitelement in der in Fig. 3a gezeigten ausgefahrenen Stellung eine in Fig. 3b erkennbare Öffnung in einer Radhausverkleidung an deren Außenkante öffenbar ist;

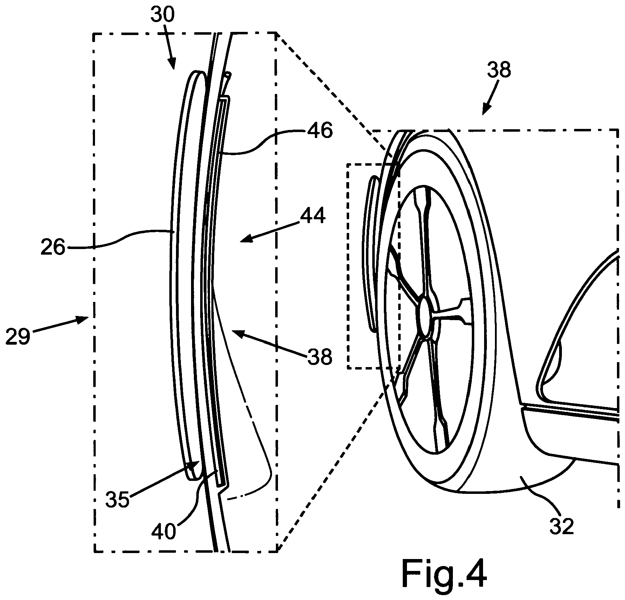

- Fig. 4: eine weitere perspektivische Rückansicht auf die Radhausverkleidung gemäß Fig. 3b, wobei in einer ausschnittsweisen Detailansicht davon separat das ausgefahrene Luftleitelement sowie die hierdurch freigegebene Öffnung in der Radhausverkleidung erkennbar sind und

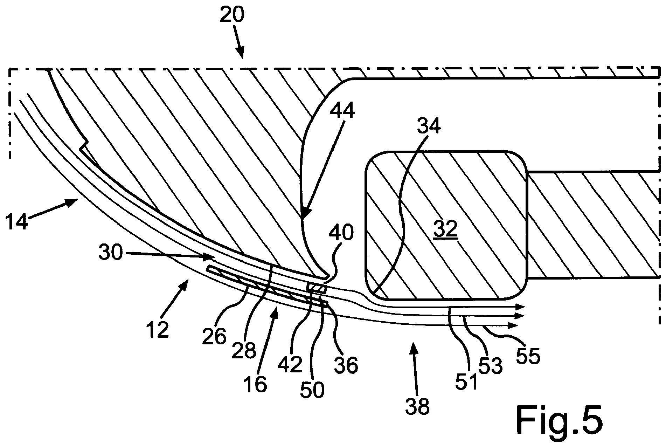

- Fig. 5: eine ausschnittsweise Schnittansicht entlang einer in Fahrzeuglängsrichtung beziehungsweise in Fahrzeugquerrichtung verlaufenden horizontalen Schnittebene durch die Luftleiteinrichtung gemäß den Fig. 3 und 4 bei ausgefahrenem Luftleitelement.

In Fig. 1 ist in einer ausschnittsweisen perspektivischen Vorderansicht ein Fahrzeugbug 10 eines Personenkraftwagens erkennbar. Insbesondere erkennbar ist dabei ein Eckbereich beziehungsweise Übergangsbereich 12 zwischen einem Frontbereich 14 und einem Seitenbereich 16 des Fahrzeugbugs 10. Im Frontbereich 14 auf der Frontseite des Kraftwagens ist bei dem hier gezeigten Ausführungsbeispiel zumindest eine Kühlermaske 18 mit einem Kühlergrill 20 vorgesehen, welche beispielsweise als Teil einer vorderen Stoßfängerverkleidung 22 ausgebildet sein können. Hier sind unterschiedlichste Gestaltungen denkbar, so dass die vordere Stirnseite des Fahrzeugbugs 10 generell als Frontbereich 14 bezeichnet wird. Der Frontbereich 14 geht im Übergangsbereich 12 in den Seitenbereich 16 des Kraftwagens über, welcher beispielsweise durch einen entsprechenden vorderen, in eine Frontteil oder die Seitenwand des Kraftwagens integrierten und als separates Montageteil ausgebildeter Kotflügel oder dergleichen gebildet sein beziehungsweise aufweisen kann. Nach oben hin werden der Frontbereich 14 und der Seitenbereich 16 durch eine Fronthaube 24 begrenzt.

In Zusammenschau der beiden Darstellungen gemäß Fig. 1 wird deutlich, dass im Übergangsbereich 12 zwischen dem Frontbereich 14 und dem Seitenbereich 16 vorliegend ein gebogenes, flügelartiges beziehungsweise paneelartiges Luftleitelement 26 vorgesehen ist, welches zwischen einer in der linken Darstellung von Fig. 1 gezeigten eingefahrenen Stellung und einer rechts dargestellten ausgefahrenen Stellung verlagerbar ist. Im vorliegenden Ausführungsbeispiel liegt das Luftleitelement 26 in der eingefahrenen Stellung zumindest bereichsweise, gegebenenfalls jedoch auch überwiegend beziehungsweise vollflächig an einem - in Blickrichtung senkrecht auf das Luftleitelement 26 gesehen - dahinterliegenden beziehungsweise - in Blickrichtung vom Luftleitelement 26 auf den Seitenbereich 16 bzw. den Übergangsbereich 12 gesehen - gegenüberliegenden Verkleidungselement 28 des Fahrzeugbugs 10 an. In der ausgefahrenen Stellung hingegen bildet das Luftleitelement 26 mit dem dahinterliegenden Verkleidungselement 28 einen offenen, schlitzartigen Strömungskanal 30 aus, in welchem eine den Übergangsbereich 12 zwischen dem Frontbereich 14 und dem Seitenbereich 16 des Fahrzeugbugs 10 überströmende Luftströmung geführt und in gewünschter Weise lenkbar, umlenkbar ist. Das Luftleitelement 26 beziehungsweise die auf beiden Seiten des Kraftwagens vorgesehenen Luftleitelemente sind Teil einer Luftleiteinrichtung 29 zur Reduzierung des Strömungswiderstandes des Kraftwagens in vorzugsweise bestimmten Fahrzuständen.

Die Luftleiteinrichtung 29 ist insbesondere in Fig. 2 erkennbar, welche den Fahrzeugbug 10 in einer ausschnittsweisen Schnittansicht entlang einer in Fahrzeuglängsrichtung (x-Richtung) und in Fahrzeugquerrichtung (y-Richtung) verlaufenden, horizontalen Schnittebene zeigt. Erkennbar ist dabei zunächst der Übergangsbereich 12, in welchem der Frontbereich 14 in den Seitenbereich 16 des Fahrzeugs übergeht. Insbesondere erkennbar ist zudem, dass beim vorliegenden Fahrzeugbug 10 ein geringer Überhang vorgesehen ist, das heißt, dass der Fahrzeugbug 10 insgesamt sehr kurz ausgebildet ist und das Vorderrad 32 einen relativ geringen Abstand zur Stirnseite des Kraftwagens aufweist. Dies ist einer der Gründe dafür, dass ein Vorderrad 32 mit einer äußeren Radflanke 34 in die entlang des Übergangbereichs 12 des Fahrzeugbugs 10 strömende Luftströmung hineinreicht. Weiterhin erkennbar ist das im Abstand zum dahinterliegenden Verkleidungselement 28 angeordnete Luftleitelement 26 in seiner ausgefahrenen Stellung, in welcher dieses einen von vorne nach hinten durchgängigen Strömungskanal 30 ausbildet.

In Zusammenschau mit der rechten Darstellung von Fig. 1 wird zudem erkennbar, dass sich dieser Strömungskanal 30 wie auch das Luftleitelement 26 zumindest im Wesentlichen über die gesamte Höhe des Fahrzeugbugs 10 und über die Hälfte der Höhe des dazugehörigen, das heißt benachbart angeordneten Vorderrades 32 erstreckt. Während also der Strömungskanal 30 in der eingefahrenen Stellung des Luftleitelements 26 vorzugsweise vollständig verschlossen, zumindest aber im Wesentlichen verschlossen ist, so dass kein Fahrtwind auf seiner Vorderseite beziehungsweise nach vorne hin offenen, schlitzförmigen, im Wesentlichen in Fahrzeughochrichtung (z-Richtung) ausgerichteten Einströmöffnung 33 einströmen kann, bildet dieser in der ausgefahrenen Stellung einen zumindest im Wesentlichen über die gesamte Höhe des Fahrzeugbugs 10 erstreckenden, schlitzartigen, oben und unten offenen Querschnitt aus. In Figur 2 ist zu erkennen, dass bei dem hier dargestellten Ausführungsbeispiel der freie Querschnitt des Strömungskanals 30 im Mündungsbereich der Einströmöffnung 33 größer ist und in Richtung der Mündung seiner Ausströmöffnung 35 kleiner wird vorzugsweise im Mündungsbereich der Ausströmöffnung 35 ein Minimum aufweist. Aufgrund des sich verjüngenden Querschnitts des Strömungskanals 30 wird die durchströmende Luft beschleunigt und mit entsprechender höherer Geschwindigkeit aus der Ausströmöffnung 35 in Richtung des benachbart angeordneten Vorderrads 32 quasi ausgeblasen.

Mittels des in seine ausgestellte Position verlagerten Luftleitelements 26 und des so gebildeten beziehungsweise durch das Abheben des Luftleitelements 26 von der Karosserie des Kraftwagens geöffneten beziehungsweise durchlässigen Strömungskanals 30 wird die im Fahrbetrieb des Kraftwagens an die Kraftwagenfront beziehungsweise im seitlichen Frontbereich auftreffende Luft zunächst in zumindest zwei Teilluftströme aufgeteilt. Ein erster Teilluftstrom gelangt über den Strömungskanal 30 zur Ausströmöffnung 35 und wird so geleitet beziehungsweise umgelenkt, dass dieser Teilluftstrom teilweise direkt stirnseitig auf das Vorderrad 32 auftrifft, wie ohne weiteres anhand der in Figur 2 dargestellten Strömungslinien 31 ersichtlich, und teilweise auf die Radflanke 34 auftrifft beziehungsweise parallel zu dieser seitlich am Vorderrad 32 vorbeiströmt. Ein zweiter Teilluftstrom überströmt das Luftleitelement 26 entlang seiner gekrümmten Außenfläche 37 und trifft nach dem Luftleitelement 26 quasi parallel zum ersten Teilluftstrom auf diesen, was zu einer entsprechenden gleichmäßigen Überströmung des das Vorderrad 32 aufnehmenden Radhauses 38 führt. Nur durch die Kombination dieser beiden Teilluftströme wird eine optimale Überströmung des vorderen Radhauses 38 erzielt.

Durch das Ausfahren des Luftleitelements 26 insbesondere bei höheren Geschwindigkeiten wird somit die Umlenkung der Luftströmung im Übergangsbereich 12 zwischen dem Frontbereich 14 und dem Seitenbereich 16, also an der Seite der Fahrzeugfront, verstärkt und somit eine verbesserte Überströmung des jeweiligen vorderen Radhauses 38 beziehungsweise des zugehörigen Vorderrades 32 pro Fahrzeugseite erreicht. Es ist demzufolge klar, dass die vorliegende Luftleiteinrichtung 29 auf beiden Fahrzeugseiten mit jeweils einem Luftleitelement 26 mit entsprechender Peripherie, wie vorstehend beschrieben, vorgesehen ist. Dabei ist es weiter vorteilhaft, wenn das Luftleitelement 26 in Abhängigkeit von der Fahrgeschwindigkeit des Kraftwagens verlagert wird, sich also demzufolge bei Stillstand des Fahrzeugs in der eingefahrenen Stellung befindet und vorzugsweise erst nach Überschreiten einer bestimmten Geschwindigkeit ausgefahren wird, um bei höheren Geschwindigkeiten den gewünschten Effekt zu erzielen. Somit wird erreicht, dass im Stadtverkehr oder dergleichen eine optisch ansprechende Gestaltung des Fahrzeugbugs erreicht wird, wohingegen dieser während der Fahrt aerodynamisch optimiert ist. Die Verstellung des Luftleitelements 26 kann gegebenenfalls auch stufenlos erfolgen.

Aus der linken Abbildung der Figur 1 ist überdies zu erkennen, dass das hinter dem Luftleitelement 26 liegende Verkleidungselement 28 mit den an diesen angrenzenden Verkleidungselementen des Frontbereichs 14, des Übergangsbereichs 12 und des Seitenbereichs 16 eine zumindest im Wesentlichen aerodynamisch optimierte Außenhaut bildet, entlang derer die Luftströmung bei ausgefahrenem Luftleitelement 26 strömt und nicht übermäßig verwirbelt wird.

Die Fig. 3a und 3b zeigen in einer jeweiligen ausschnittsweisen Perspektivansicht eine Luftleiteinrichtung 29 gemäß einer modifizierten Ausführungsform, welche jedoch im Wesentlichen mit derjenigen Luftleiteinrichtung 29 gemäß den Fig. 1 und 2 übereinstimmt, so dass im Weiteren lediglich zusätzliche technische Besonderheiten erläutert werden.

So ist zunächst in Fig. 3a erkennbar, dass das Luftleitelement 26 mit einer hinteren Endkante 36 an das Radhaus 38 des zugehörigen Vorderrades 32 angrenzt und somit zumindest in eingefahrener Stellung eine Begrenzung des zugehörigen Radhausausschnitts des Seitenbereichs 16 des Fahrzeugbugs 10 bildet, zumindest aber angrenzend hierzu angeordnet ist.

Fig. 3b zeigt in einer entsprechenden Perspektivansicht von vorne die Luftleiteinrichtung 29 bei weggelassenem Luftleitelement 26, so dass insbesondere erkennbar ist, dass an der Karosserieaußenseite, zumindest im Übergangbereich 12 und gegebenenfalls auch teilweise schon im Seitenbereich 16 eine Ausnehmung 39 eingeformt ist, welche zum Frontbereich 14 hin ausläuft, das heißt stufenlos in diesen übergeht. Auf der dem Radhaus nahen Seite der Ausnehmung 39 ist diese so tief, dass eine lange schmale Stufe 41 gebildet ist, wobei der so gebildete Absatz zumindest im Wesentlichen eben ist. In dieser Stufe 41 ist eine schlitzartige Öffnung 40 vorgesehen, welche sich in einem geringen Abstand zu einer Außenkante 42 der Stufe 41 im Wesentlichen in Fahrzeughochrichtung erstreckt. Die Öffnung 40 weist einen -im Querschnitt gesehengekrümmten, an die Kontur der Karosserieaußenhaut angepassten Verlauf auf und erstreckt sich annährend über die gesamte Längserstreckung der Stufe 41 und der Höhe des Luftleitelements 26.

Die Öffnung 40 beziehungsweise ein sich daran anschließender, hier äußert kurzer Luftkanal mündet im Radhaus 38 und zwar insbesondere an einer Außenkante 46 der Radhausverkleidung 44. Alternativ hierzu ist es möglich, dass der die Öffnung 40 aufweisende Luftkanal auf der Innenseite des Seitenbereichs 16 der Karosserie, beispielsweise an einer Kotflügelwand vorgesehen, insbesondere ausgebildet ist.

Dies wird insbesondere auch in Zusammenschau mit den Fig. 4 und 5 erkennbar. Fig. 4 zeigt dabei in einer perspektivischen Seitenansicht von schräg hinten die Luftleiteinrichtung 29 sowie in einem ausschnittsweise vergrößerten Detail die Öffnung 40 innerhalb des Radhauses 38, wobei sich im seitlichen Abstand zum zugehörigen Verkleidungselement 28 beziehungsweise zur Außenkante 42 das Luftleitelement 26 erstreckt.

Fig. 5 zeigt in einer ausschnittsweisen Schnittansicht entlang einer in Fahrzeuglängs- und -querrichtung verlaufenden horizontalen Schnittebene nochmals schematisch die beschriebene Luftleiteinrichtung 29 bei ausgefahrenem Luftleitelement 26. Dabei wird erkennbar, dass durch das Ausfahren des Luftleitelements 26 die Absperrung des Strömungskanals 30 aufgehoben und insbesondere die Öffnung 40 beziehungsweise der entsprechende Luftspalt an der Außenkante 42 der vorderen Radhausverkleidung 44 geöffnet beziehungsweise freigegeben wurde, durch den ebenfalls ein Teil der geleiteten Luft auf die Reifenflanke 34 gelangt. Ein weiterer Teilluftstrom durchströmt einen zwischen dem Luftleitelement 26 und der Karosserieaußenseite im Bereich der Außenkante 42 der Stufe 41 begrenzten Freiraum 50 und gelangt von dort -im Wesentlichen parallel gerichtet zu dem über die Öffnung 40 strömenden Teilluftstrom- in das Radhaus 38 beziehungsweise einen Radhaus nahen Randbereich. Dabei ist dieser Teilluftstrom im Wesentlichen parallel zur Radflanke 36 und nicht unmittelbar auf die Lauffläche des Reifens des Vorderrads 32 gerichtet. Durch die Kombination der beiden Teilluftströme, welche demzufolge durch die Öffnung 40 beziehungsweise außenseitig davon zwischen der Außenkante 42 des beziehungsweise am Verkleidungselement 28 und dem Luftleitelement 26 hindurch gelangen, wird somit eine optimale Überströmung des zugehörigen vorderen Radhauses 38 erzielt beziehungsweise auch mittels beziehungsweise durch Unterstützung der über die Außenseite des Luftleitelements 26 überströmenden Luftströmung. Diese vorstehend beschriebenen drei Luftströmungen sind in Figur 5 jeweils mittels einer Linie 51, 53 beziehungsweise 55 angedeutet.

In Fig. 4 ist zudem erkennbar, dass sich die als Schlitz ausgebildete Öffnung 40 von der Radoberseite bis hinunter ein Stück weit über die Radachse hinaus erstreckt und bei diesem hier dargestellten, vorteilhaften Ausführungsbeispiel der Luftleinrichtung 29 in etwa dieselbe Höhe aufweist wie das Luftleitelement 26.

Auch in dem vorliegenden Ausführungsbeispiel ist eine geschwindigkeitsabhängige Regelung des Luftleitelements 26, wie diese bereits im Zusammenhang mit dem ersten Ausführungsbeispiel beschrieben worden ist, vorgesehen.

Zusammenfassend bleibt festzuhalten, dass mittels der erfindungsgemäßen -vorzugsweise auf jeder Fahrzeugseite vorgesehenen- Luftleiteinrichtung 29, deren Luftleitelement 26 bei höheren Geschwindigkeiten ausfährt beziehungsweise von der Karosserieaußenseite abhebt, die Umlenkung der Strömung an der Seite der Fahrzeugfront zur besseren Überströmung der jeweiligen vorderen Radhauses 38 verstärkt. Gleichzeitig wird beim Ausfahren des Leitelementes 26 zumindest eine Luftöffnung geöffnet und/oder ein Luftspalt gebildet, über den ein Teil der geleiteten Luft in das Radhaus 38 gelangt, vorzugsweise gerichtet auf einen Seitenbereich des Vorderrades 32, insbesondere auf die oder nahe der Reifenflanke 34. Nur durch die Kombination dieser beiden Teilluftströme wird eine optimale Überströmung der vorderen Radhäuser erzielt.

## Patentansprüche

1. Luftleiteinrichtung (29) für einen Fahrzeugbug (10), mit einem jeweiligen Luftleitelement (26), welches in einem Übergangsbereich (12) zwischen einem Frontbereich (14) und einem Seitenbereich (16) des Fahrzeugbugs (10) angeordnet und aus einer eingefahrenen in wenigstens eine ausgefahrene Stellung verlagerbar ist, wobei das Luftleitelement (26) in der ausgefahrenen Stellung mit einem dahinterliegenden Verkleidungselement (28) des Fahrzeugbugs (10) einen Strömungskanal (30) ausbildet, mittels welchem eine den Übergangsbereich (12) zwischen dem Frontbereich (14) und dem Seitenbereich (16) des Fahrzeugbugs (10) überströmende Luftströmung umlenkbar ist und wobei der Strömungskanal (30) in der eingefahrenen Stellung des Luftleitelements (26) zumindest im Wesentlichen verschlossen ist,
**dadurch gekennzeichnet, dass**
das Luftleitelement (26) mit einer hinteren Endkante (36) an ein Radhaus (38) eines zugehörigen Vorderrades (32) angrenzt, dass durch das Verlagern des Luftleitelements (26) in die ausgefahrene Stellung eine in das Radhaus (38) mündende Öffnung (40) im Bereich einer vorderen Außenkante des Radhauses (38) oder ein sich an die Öffnung (40) anschließender, in das Radhaus (38) mündender Strömungskanal geöffnet wird, durch welche beziehungsweise welchen eine Luftströmung (51) leitbar ist.

2. Luftleiteinrichtung nach Anspruch 1,
**dadurch gekennzeichnet, dass**
sich das Luftleitelement (26) zumindest im Wesentlichen über die gesamte Höhe des Kraftwagenbugs (10) erstreckt.

3. Luftleiteinrichtung nach einem der vorhergehenden Ansprüche,
**dadurch gekennzeichnet, dass**
im Fahrbetrieb bei in ausgefahrener Stellung angeordnetem Luftleitelement (26) die Öffnung (40) freigegeben ist und ein Teil der geleiteten Luft über die Öffnung (40) und den Luftkanal in das Radhaus (38) und dort auf eine äußere Reifenflanke (34) des Vorderrades (32) gelangt.

4. Luftleiteinrichtung nach einem der vorhergehenden Ansprüche,
**dadurch gekennzeichnet, dass**
im Fahrbetrieb bei in ausgefahrener Stellung angeordnetem Luftleitelement (26) ein Freiraum (50) zwischen dem Luftleitelement (26) und der Karosserieaußenseite begrenzt ist, über den ein weiterer Teilluftstrom -im Wesentlichen parallel gerichtet zu dem über die Öffnung (40) strömenden Teilluftstrom- in das Radhaus (38) oder einen Radhaus (38) nahen Randbereich gelangt.

5. Luftleiteinrichtung nach Anspruch 4,
**dadurch gekennzeichnet, dass**
dieser weitere Teilluftstrom im Wesentlichen parallel zur äußeren Radflanke (36) des Vorderrades (32) und seitlich an der Lauffläche des Reifens des Vorderrads (32) vorbei gerichtet ist.

6. Luftleiteinrichtung nach einem der vorhergehenden Ansprüche,
**dadurch gekennzeichnet, dass**
die Öffnung (40) als Schlitz oder dergleichen ausgebildet ist, welcher sich über einen Teil der Höhe des zugehörigen Vorderrades (32), vorzugsweise über mindestens die halbe Höhe des Vorderrades (38) erstreckt.

## Claims

1. Air guidance device (29) for a vehicle front (10), with a respective air guidance element (26), which is located in a transitional region (12) between a front region (14) and a side region (15 of the vehicle front (10) and can be moved from a retracted into at least one extended position, wherein the air guidance element (26) forms in the extended position together with a trim element (28) of the vehicle front (10) a flow passage (30), by means of which an air flow flowing across the transitional region (12) between the front region (14) and the side region (15) of the vehicle front (10) can be diverted, and wherein the flow passage (30) is at least substantially blocked in the retracted position of the air guidance element (26),
**characterised in that**
the air guidance element (26) adjoins with a rear end edge a wheel well (38) of an associated front wheel (32), and **in that**, by moving the air guidance element (26) into the extended position, an opening (40) terminating into the wheel well (38) in the region of a front outer edge of the wheel well (38) or a flow passage terminating into the wheel well (38) is opened, through which opening or flow passage an air flow (51) can be guided.

2. Air guidance device according to claim 1,
**characterised in that**
the air guidance element (26) extends at least substantially across the entire height of the motor vehicle front (10).

3. Air guidance device according to any of the preceding claims,
**characterised in that**
in the driving mode with the air guidance element (26) in the extended position, the opening (40) is uncovered and a part of the guided air flows via the opening (40) and the air passage into the wheel well (38) and from there onto an outer tyre wall (34) of the front wheel (32).

4. Air guidance device according to any of the preceding claims,
**characterised in that**
in the driving mode with the air guidance element (26) in the extended position, a free space (50) is bounded between the air guidance element (26) and the outside of the body, via which free space a further part-air flow - oriented substantially parallel to the part-air flow flowing via the opening (40) - flows into the wheel well (38) or into an edge region close to the wheel well (38).

5. Air guidance device according to claim 4,
**characterised in that**
said further part-air flow is oriented substantially parallel to the outer wheel side (36) of the front wheel (32) and laterally past the tread of the tyre of the front wheel (32).

6. Air guidance device according to any of the preceding claims,
**characterised in that**
the opening (40) is designed as a slot or the like, which extends across a part of the height of the associated front wheel (32), preferably at least across half of the height of the front wheel (32).

## Revendications

1. Dispositif de guidage d'air (29) pour un avant de véhicule (10) comprenant un élément de guidage d'air respectif (26) qui est disposé dans une zone de transition (12) entre une zone avant (14) et une zone latérale (16) de l'avant de véhicule (10) et qui peut être déplacé d'une position rétractée à au moins une position déployée, l'élément de guidage d'air (26) dans la position déployée formant avec un élément d'habillage caché (26) de l'avant de véhicule (10) un canal d'écoulement (30), au moyen duquel un flux d'air peut changer de direction transférant la zone de transition (12) entre la zone avant (14) et la zone latérale (16) de l'avant de véhicule (10), et le canal d'écoulement (30) étant au moins sensiblement fermé dans la position rétractée de l'élément de guidage d'air (26),
**caractérisé en ce que** l'élément de guidage d'air (26) par un bord d'extrémité arrière (36) avoisine un passage (38) d'une roue avant correspondante (32), **en ce que** par déplacement de l'élément de guidage d'air (26) dans la position déployée une ouverture (40) débouchant dans le passage de roue (38) s'ouvre dans la zone d'un bord extérieur avant du passage de roue (38) ou un canal d'écoulement débouchant dans le passage de roue (38), adjacent à l'ouverture (40), par laquelle ou par lequel un écoulement d'air (51) peut être guidé.

2. Dispositif de guidage d'air selon la revendication 1, **caractérisé en ce que** l'élément de guidage d'air (26) s'étend au moins sensiblement sur toute la hauteur de l'avant de véhicule (10).

3. Dispositif de guidage d'air selon l'une des revendications précédentes, **caractérisé en ce que** lorsque le véhicule roule et que l'élément de guidage d'air (26) est dans une position déployée, l'ouverture (40) est libérée et une partie de l'air guidé parvient par l'ouverture (40) et le canal d'écoulement dans le passage de roue (38) et là sur un flanc de roue extérieur (34) de la roue avant (32).

4. Dispositif de guidage d'air selon l'une des revendications précédentes, **caractérisé en ce que** lorsque le véhicule roule et que l'élément de guidage d'air (26) est dans une position déployée, un espace libre (50) est délimité entre l'élément de guidage d'air (26) et le côté extérieur de la carrosserie, par lequel une autre partie d'air - sensiblement parallèle à la partie d'air s'écoulement par l'ouverture (40) parvient dans le passage de roue (38) ou un passage de roue (38) adjacent à la zone de bord.

5. Dispositif de guidage d'air selon la revendication 4, **caractérisé en ce que** ledit autre partie d'air est orientée sensiblement parallèlement au flanc de roue extérieur (36) de la roue avant (32) et latéralement devant la face de roulement du pneu de la roue avant (32).

6. Dispositif de guidage d'air selon l'une quelconque des revendications précédentes, **caractérisé en ce que** l'ouverture (40) est conçue sous la forme d'une fente ou similaire qui s'étend sur une partie de la hauteur de la roue avant correspondante (32), de préférence sur au moins la moitié de la hauteur de la roue avant (38).
